# EUROPEAN PATENT APPLICATION

(11) **EP 2 309 098 A1**
(43) Date of publication of application: **13.04.2011**
(21) Application number: 09012405.8
(22) Date of filing: 30.09.2009
(51) Int. Cl.: F01D 5/20

(54) **Airfoil and corresponding guide vane, blade, gas turbine and turbomachine**

(71) Applicant: SIEMENS AKTIENGESELLSCHAFT, 80333 München (DE)
(72) Inventor: Shepherd, Andrew, LN4 1PA Branston Lincoln (GB); Twell, Philip, LN2 3JN Lincoln (GB)

(57) **Abstract**

The invention related to an airfoil (27) of a turbomachine, particularly a gas turbine (1), the airfoil (27) particularly being arranged in a compressor section (5) of the gas turbine (1), the airfoil (27) comprising a platform (25), a pressure surface (42) and a suction surface (43), and a tip region (29). The pressure surface (42) and the suction surface (43), extend substantially perpendicular to the platform (25) along a first direction (D), the first direction (D) being defined as a direction substantially perpendicular to the platform (25) and progressing with a distance to the platform (25). The tip region (29) is located between the pressure (42) and the suction surface (43) opposite to the platform (25) in respect of the pressure (42) and the suction surfaces (43), being a distant end of the airfoil (27) in direction along the first direction (D). The tip region (29) is configured such that the tip region (29) comprises a first surface (70) with a first surface expanse less than a cross sectional plane of the airfoil (27) perpendicular to the first direction (D) and with a first distance (D1) to the platform (25) along the first direction (D), and a second surface (71) with a second surface expanse and with a second distance (D2) to the platform (25) along the first direction (D), whereas the first distance (D1) is greater than the second distance (D2) and the first surface (70) and the second surface (71) together build a profiled surface, particularly a ribbed surface.

## Description

### FIELD OF THE INVENTION

The invention relates to an airfoil, a guide vane, and a blade, particularly of a compressor or a turbine section of a turbomachine. Furthermore the invention relates to a turbomachine, especially a gas turbine, comprising at least one airfoil.

### BACKGROUND OF THE INVENTION

A conventional gas turbine engine comprises a compressor which is used for pressurising ambient air. The compressed air is mixed with fuel and burned in a combustor. Energy is extracted from the hot combustion gas by passing it through a turbine section of the gas turbine engine. The rotatable sections of an engine typically comprise annular arrays of compressor or turbine rotor blades, the blades normally being intersected with annular arrays of static aerodynamic guide vanes, also called stator vanes. Each disc of guide vanes and each disc of rotor blades are arranged axially alternately. One disc of rotor blades and one disc of guide vanes are referred to as a stage. The guide vanes ensure the gas impinges on the rotor blades at the correct angle.

Optionally, the first stages of a compressor may be equipped with variable guide vanes that are pivotable to adapt the stagger angle during different operating modes of the compressor.

A rotor comprises a plurality of rotor blades arranged at even intervals in a circumferential direction, each of which is obliquely positioned to both the front direction and the rotating direction so as to compress air downstream by rotation thereof. In each blade, a first face - e.g. directed forward - is to suck air and therefore referred to as a suction side or suction surface and a second face - e.g. directed aftward - is to compress air and referred to as a pressure side or pressure surface within this application. To realise the compression of the air, the suction side is typically made convex and the pressure side is made concave.

For a good performance of a turbine it is important to establish proper clearance between the rotating blades and a stationary component which encloses the rotating blades. This clearance may be defined as the distance between these mentioned elements after their assembly but prior to initial operation of the turbine (cold clearance measurement).

It is a goal to have as little leakage from the path of the air within the compressor. Hardly any air should be able to leave the path of the air because this would lead to an unwanted drop of air pressure. Besides, the complete air stream should be compressed in the downstream direction. Reverse air flow should be prevented. Thus, all gaps between rotor and stator should be limited to a minimum so that all air that is present in the path of air will be compressed and guided in the downstream direction. This also includes gaps at the tip of the rotor blades between the blades and a surrounding compressor component or gaps at the tip of the stator vanes between the stator vane and the inner rotating shaft.

To minimise these gaps, a distal end of each blade - i.e. a tip section of the blade - may be in frictional contact with an inner face of a case of the compressor and may be coated with a hard coating to abrade the inner face of the case of the compressor. Because of the abrasiveness of the hard coating the distal end itself is protected from deterioration by frictional contact. The opposite member preferentially wears in comparison between the tip section and the opposite member. Such a configuration allows a perfect match of the tip of the blade and the opposing compressor casing, even with manufacturing or assembly tolerances.

According to EP 1 930 547 A2 a hard coating is applied to a specific face of the tip of a blade. This may lead to an improved fatigue lifetime of the blade. On the other hand the use of special coatings may be costly.

In US patent 4,671,735 A1 a rotor of an axial-flow compressor is discussed with means for sealing the rotor blade tips relative to a casing wall provided with a coating is to be capable of abrasion but at the same time also low in wear.

In US patent US 4,295,786 A1 a gas path seal suitable for use with a turbine engine or compressor is provided. A shroud wearable or abradable by the abrasion of the rotor blades of the turbine or compressor shrouds the rotor blades. With this approach close tolerance between the tips of the blades and the surrounding shroud or housing which seals one side of the blades from the other can be reach even though the clearance dimensions are dynamic, i.e. the clearance dimensions increase or decrease with temperature and with mechanical and aerodynamic forces and may increase or decrease faster than the rotor.

US patent US 4,526,509 A1 discloses a further type of seal that is in rubbing contact with a tip of a rotor blade, but not being abradable but resilient.

### SUMMARY OF THE INVENTION

The present invention seeks to mitigate drawbacks of the prior art. Specifically it is an object of the invention to provide an airfoil or a component comprising such an airfoil that leakage over the tip of the airfoil is reduced, by also considering material costs and/or durability of the airfoil. This objective is achieved by the independent claims. The dependent claims describe advantageous developments and modifications of the invention.

In accordance with the invention there is provided an airfoil of a turbomachine, particularly a gas turbine, the airfoil particularly being arranged in a compressor section of the gas turbine, the airfoil being in particular a vane or a blade. The gas turbine may be an axial flow turbine and the compressor section an axial flow compressor. Furthermore, the invention may also apply to blades or vanes within a turbine section. The airfoil comprises a platform, a pressure surface, a suction surface, and a tip region. The pressure surface and a suction surface both extend substantially perpendicular to the platform along a first direction, the first direction being defined as a direction substantially perpendicular to the platform and progressing with a distance to the platform. The tip region is located between the pressure and the suction surface opposite to the platform in respect of the pressure and the suction surfaces. The tip region is defined as a distant end of the airfoil in direction along the first direction and is configured such that the tip region comprises a first and a second surface. The first surface has a first surface expanse less than a cross sectional plane of the airfoil perpendicular to the first direction and has a first distance to the platform along the first direction. The second surface has a second surface expanse and a second distance to the platform along the first direction. Additionally the first distance is greater than the second distance. Furthermore the first surface and the second surface together build a profiled surface, particularly a ribbed surface.

With "tip region" the part of the airfoil is meant, when being assembled within the gas turbine, that is directed to an opposing surface of a component of the gas turbine - e.g. a compressor casing or a rotor.

The first surface expanse is compared to the cross sectional plane of the airfoil perpendicular to the first direction, i.e. substantially parallel to the platform or parallel to the spread of the tip section. Typically a cross sectional plane of a blade differs in size based on the position where the measurement is taken. Particularly a smallest possible cross sectional plane, an average cross sectional plane, a largest cross section, or a cross section of a plane close to the tip region could be taken for the to be compared cross sectional plane.

The first and second distance may be average values, if the distance of the first surface (or the second surface) in relation to the platform is different based on at which actual position within the first surface (or the second surface) the measurement is taken.

The inventive airfoil may be advantageous - especially when also considering the subject matter of the dependent claims - , because this form of the airfoil provides only a small contact surface - the first surface - to an opposing surface, once assembled. This may lead to the possibility to have a deformable tip section. Thus a reduced operating clearance between the tip region and the opposing surface may be provided which leads to reduced leakage and eventually to an improved compressor efficiency.

The first surface is not required to be continuous and may be a plurality of separated partial surfaces together building the overall first surface. The same applies to the second surface. Actually, in a preferred embodiment the first surface may be a plurality of elevated areas of the profiled surface and the second surface being a plurality of recessed areas of the profiled surface. Additionally the plurality of elevated areas of the profiled surface and the plurality of recessed areas of the profiled surface may be arranged alternating. For example the tip region may have a plurality of alternating ribs and slots, the surface of the ribs defining the first surface and the surface of the slots defining the second surface. The transition from one rib to an adjacent slot may be via a step down from the first distance to the second distance. All ribs may belong to the first surface and may be located in one common plane with the first distance. All slots may belong to the second surface and may be located in one further common plane with the second distance.

In yet another embodiment the elevated areas and/or the recessed areas may be arranged as ribs between the suction surface and the pressure surface. The ribs may be substantially straight. Furthermore the elevated areas and/or the recessed areas may be arranged as ribs substantially parallel to the suction surface or to the pressure surface or may be straight from the leading edge and the trailing edge of the airfoil independently of the orientation of the suction or pressure surface. As a further option the elevated areas and/or the recessed areas may be arranged as a grid pattern.

The grid pattern may have a shape of a first plurality of ribs intersected with a second plurality of ribs. Alternatively, the grid pattern may have a shape of an inverse profile of a first plurality of ribs intersected with a second plurality of ribs. In both cases the first plurality of ribs may be diagonal in direction of a trailing edge of the airfoil and the second plurality of ribs may be diagonal in direction of a leading edge of the airfoil. Thus, in case of a plurality of ribs intersected with a second plurality of ribs, the first surface may substantially be formed of a plurality of exalted diamonds surrounded by recesses forming the second surface. Thus, in case of an inverse profile of a first plurality of ribs intersected with a second plurality of ribs, the second surface may be formed of a plurality of diamond-shaped cavities, surrounded by walls with a top surface being the first surface.

The invention may be particularly advantageous, if the tip region may be composed of a deformable material. In this case the cold clearance of the airfoil to its opposing mating part can be smaller. If contact is made with the adjoining part during operation, the tip region of the airfoil is allowed to deform. Thus no precise manufacturing or configuration of blades is required. Tolerances are allowed so that manufacturing or installation costs can be reduced. Also no expensive abradable or abrasive coating is required. If no contact of the tip region with the opposing part is present during operation due to tolerances and operating conditions, the operating gap and the leakage will be reduced. With reduced clearance and reduced leakage the overall compressor efficiency will be improved.

In yet another embodiment the tip region - particularly the first surface and possibly only the first surface - may either be coated with an abrasive coating for abrading an opposing surface or may be coated with an abradable coating, so that the tip region gets abraded. Such a coating may be used as an alternative to the deformable tip or may even be combined with the deformable tip. This is possible by using only less abradable or abrasive coatings on the tip region, because only the raised first surface may be coated. This again may reduce costs.

The invention is also directed to a blade and/or a guide vane, particularly a variable guide vane of a gas turbine, comprising an airfoil as explained. The blade and/or vane may be located in a compressor or a turbine section of the gas turbine.

Besides, the invention is also directed to a gas turbine comprising at least one of a compressor section or a turbine section, the compressor section or the turbine section comprising at least one airfoil configured as explained.

Beside a gas turbine, the invention is directed to all kinds of turbomachinery equipment, like turbines, compressors, pumps that comprise rotating parts.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:
- Fig. 1: shows a gas turbine in a longitudinal partial section;
- Fig. 2: shows a cross-sectional view of a section of a flow duct of a compressor;
- Fig. 3: is a perspective view of a prior art turbine blade;
- Fig. 4: shows several profiles of the tip region of a blade, according to the invention in a perspective view.

The illustration in the drawing is schematical. It is noted that for similar or identical elements in different figures, the same reference signs will be used.

Some of the features and especially the advantages will be explained for an assembled gas turbine, but obviously the features can be applied also to the single components of the gas turbine but may show the advantages only once assembled and during operation. But when explained by means of a gas turbine during operation none of the details should be limited to a gas turbine while in operation.

In the following most of the features are explained for an axial compressor of a stationary gas turbine. Most of the features can also be applied to blades and vanes of a compressor of such a gas turbine but will also apply to a turbine section.

### DETAILED DESCRIPTION OF THE INVENTION

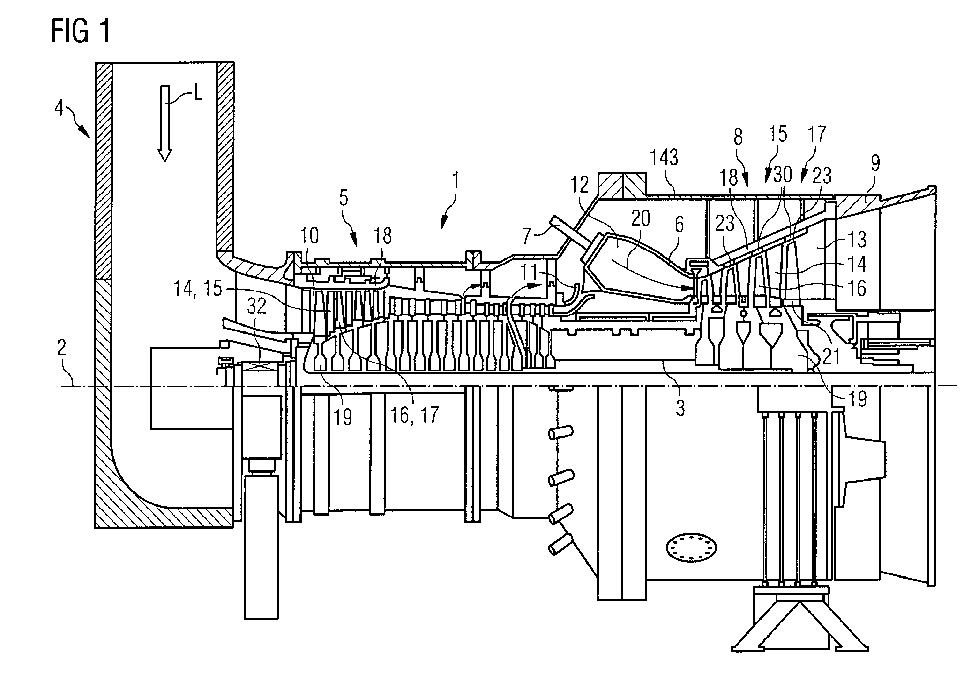

Fig. 1 shows a gas turbine 1 in a longitudinal partial section. In the interior, it has a rotor 3 which is rotatably mounted about a rotation axis 2 and is also referred to as turbine rotor or rotor shaft. Following one another along the rotor 3 are an intake casing 4, a compressor 5, torus-like annular combustion chambers 6 (only one can be seen in the figure) each having a burner 7, a turbine unit 8 and an exhaust-gas casing 9. As an alternative to the annular combustion chambers 6, also separate can combustion chambers may be present, each with one or more burners, of which there may be a plurality of them arranged around the axis of the gas turbine engine.

Provided in the compressor 5 is an annular compressor duct 10 as a flow path for air which narrows in cross section in the direction of the annular combustion chamber 6, i.e. downstream of a to be compressed fluid. Arranged at the downstream end of the compressor 5 is a diffuser 11, which is fluidically connected to the annular combustion chambers 6. Each of the annular combustion chambers 6 form a combustion space 12 for a mixture of liquid and/or gaseous fuel and compressed air from the compressor 5. A hot-gas duct 13 arranged in the turbine unit 8 is fluidically connected to the combustion spaces 12, the exhaust-gas casing 9 being arranged downstream of the hot-gas duct 13.

Sections with blades and vanes are arranged in the compressor duct 10 and in the hot-gas duct 13. In each case a turnable blade section 17 of blades 16 alternately follows a vane section 15 of non-rotatable guide vanes 14. These fixed guide vanes 14 are in this case connected to one or more guide vane carriers 18, whereas the moving blades 16 are fastened to the rotor 3 by means of a disc 19.

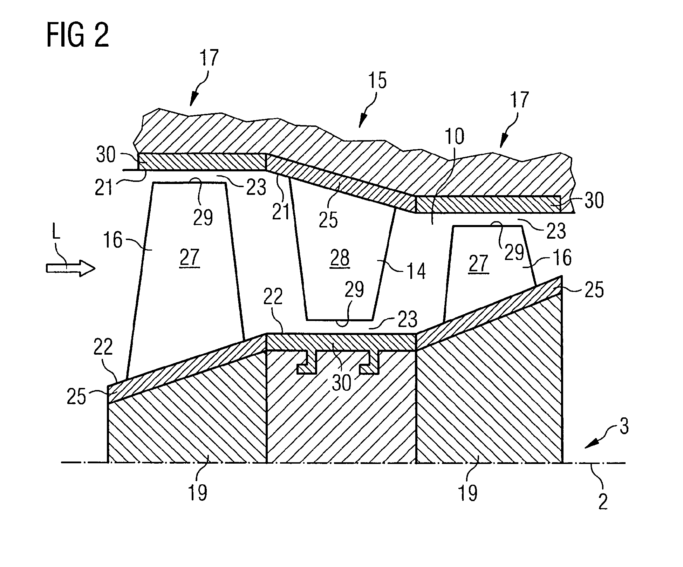

The turbine unit 8 has a conically widening hot-gas duct 13, the outer guide surface 21 of which widens concentrically in the direction of flow of the working fluid 20. The inner guide surface 22, on the other hand, is oriented essentially parallel to the rotation axis 2 of the rotor 3. At their free ends, the moving blades 16 each have an edge as a tip region 29 (see Fig. 2) - possibly grazing edges -, which form a radial gap 23 with the outer guide surfaces 21 opposite them.

The same applies to the compressor 5, in which edges are present at a tip region 29 of a blade 16 and a radial gap 23 is present with the outer opposing guide surfaces 21.

During operation of the gas turbine 1, air L is drawn in from the compressor 5 through the intake casing 4 and is compressed in the compressor duct 10. The air L provided at the burner-side end of the compressor 5 is directed through the diffuser 11 to the burners 7 and is mixed there with a fuel. The mixture is then burned, with a working fluid 20 being formed in the combustion space 12. The working fluid 20 flows from there into the hot-gas duct 13. At the moving blades 16 arranged in the turbine unit 8, the working fluid expands in an impulse-transmitting manner, so that the rotor 3 is driven.

An inlet-side compressor bearing 32 may serve, in addition to the axial and radial mounting, as an adjusting device for a displacement of the rotor 3. The rotor 3, in the steady state, may be displaced, to the left in fig. 1, from an initial position into a steady operating position against the direction of flow of the working fluid 20. As a result, the radial gap 23 formed in the turbine unit 8 by moving blades 16 and the outer guide surface 21 is reduced. This leads to a reduction in the flow losses in the turbine unit 8 and therefore to an increase in the efficiency of the gas turbine 1.

Besides, the radial gap 23 may be different for each of the blades 16 due to tolerances.

A section of the annular compressor duct 10 of the compressor 5 with two sections 17 of blades 16 and with a guide-vane section 15 arranged in between is shown in fig. 2. The annular compressor duct 10 is in this case designed as a flow duct for air L as the flow medium.

In fig. 2, the guide vane 14 is fastened to an external wall - e.g. the compressor casing -, whereas the blades 16 are connected via a disc to the rotor 3. At its fixed end, each blade 16 has a respective platform 25, the surfaces of which define the compressor duct 10 on the radial inside. Likewise, each guide vane 14, at its fixed end, has a platform 25, which defines the compressor duct 10 on the radial outside. Extending from the platform 25 of the blade 16 (or of the guide vane 14) into the compressor duct 10 is a rotatable airfoil 27 (or respectively a fixed guide airfoil 28) which compress the air L during operation of the compressor 5. The free ends of the airfoils 27, 28 opposite to the platform-side ends form a tip region 29 of the airfoils 27, 28 and are opposite respective guide rings 30, with the radial gap 23 being formed.

According to figure 2, as viewed in the axial direction, the radial gap 23 is in each case oriented substantially parallel to the rotation axis 2 in one section. On the other hand, the platforms 25 arranged in the section may be each inclined relative to the rotation axis 2 of the rotor 3, so that the flow duct 24 narrows as viewed in the axial direction. A cylindrical contour of the flow duct 10 is obtained in the regions of the radially opposite fixed and rotating components, which as viewed in the axial direction lie in sections and in the radial direction lie inside and respectively outside the guide profiles and moving profiles, respectively. In the axial direction, therefore, both the outer guide surface 21 and the inner guide surface 22 alternately run cylindrically and in such a way as to be inclined relative to the rotation axis 2 of the rotor 3, the cylindrical guide surface 21, 22 in each case being opposite an inclined guide surface 21, 22 as viewed in the radial direction of the rotor 3. This is one possible option of orientation, but alternative orientations are possible.

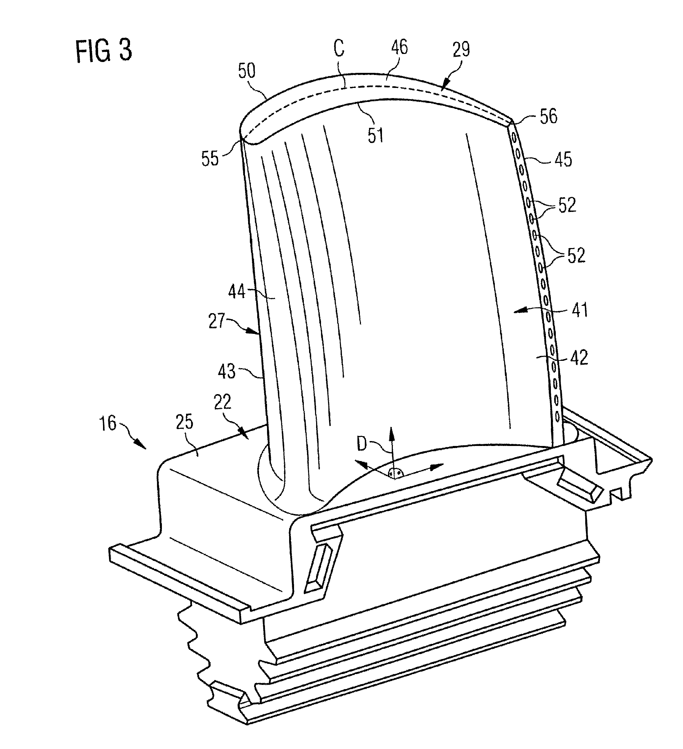

Referring to Fig. 3, an exemplary turbine blade 16 for a gas turbine engine is illustrated. The blade 16 comprises an airfoil 27. The airfoil 27 has an outer wall 41 comprising a pressure sidewall or pressure surface 42 and a suction sidewall or suction surface 43. The pressure and suction surfaces 42, 43 are joined together along an upstream leading edge 44 and a downstream trailing edge 45, where the leading and trailing edges 44, 45 are spaced axially or chordally from each other with respect to a chordal direction C. The airfoil 27 extends radially along a longitudinal direction of the blade 16 - a radial direction of the compressor 4 -, from a radially inner airfoil platform 25 to a radially outer tip region 29.

The tip region 29 includes a blade tip surface 46 having an airfoil shape, and pressure tip side 51 and suction tip side 50 which are joined together at spaced apart leading tip edge 55 and trailing tip edge 56 of the tip region 29. The pressure and suction tip sides 51, 50 form the radial ends of the pressure and suction surfaces 42, 43, respectively, of the airfoil 27.

Optionally cooling holes 52 may be provided along the trailing edge of the airfoil 27, as indicated in the figure 3.

According to figure 3, no specific profile for the tip region 29 is shown. Simply a flat surface is depicted.

For easier reference a first direction D is defined in figure 3. This direction D should also apply to the following figures and defines a direction substantially perpendicular to the platform 25 and progressing with a distance to the platform 25. To be more precise, the first direction is perpendicular to inner guide surface 22 of the platform 25.

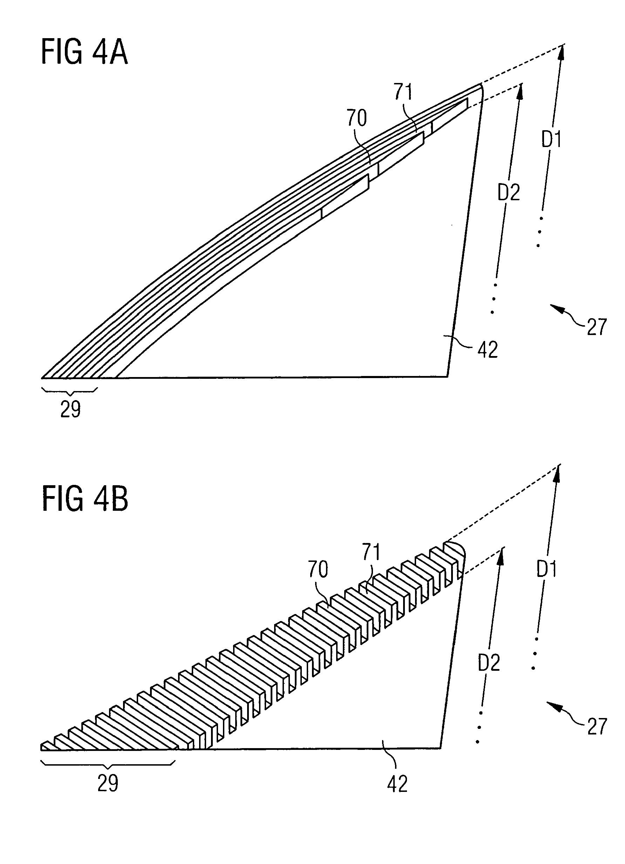

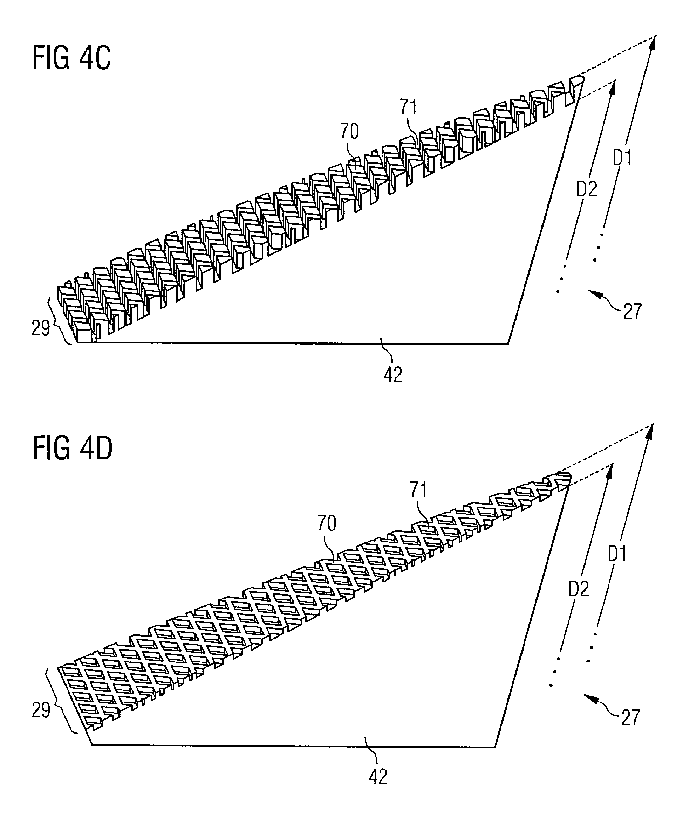

In figure 4, several profiles of the tip region 29 are depicted schematically. The actual airfoil form of the tip region 29 as shown in Fig. 3 is disregarded in figure 4 to keep the focus on the profile itself.

In figure 4 an airfoil 27 of the compressor blade 16 of an axial flow gas turbine is depicted. The airfoil 27 comprises the elements as presented according to figure 3, e.g. the platform 25 (not shown in figure 4), the pressure surface 42 and the suction surface 43 (the latter is hidden in figure 4), and a tip region 29. As before, the pressure surface 42 and the suction surface 43 extend substantially perpendicular to the platform 25 along a first direction D. D is not shown, but is defined as a direction substantially perpendicular to the platform 25 and progressing with a distance to the platform 25 as it can be seen in figure 3. A first distance D1 and a second distance D2, which will be discussed later, are marked along the direction D.

The tip region 29 is located between the pressure and the suction surface 42, 43 opposite to the platform 25 at a distant end of the airfoil 27 in direction along the first direction D.

The tip region 29 comprises a first surface 70 and a second surface 71. The first surface 70 has a first distance D1 to the platform 25 along the first direction D, and the second surface 71 has a second distance D2 to the platform 25 along the first direction D. The first distance D1 may be taken from a most distant or from an intermediate location of the first surface 70, if the first surface 70 has different distances to the platform 25 depending upon the location on the first surface 70. The second distance D2 may be taken from a least distant or from an intermediate location of the second surface 71, if the second surface 71 has different distances to the platform 25 depending upon the location on the second surface 71.

According to the invention the first surface 70 and the second surface 71 together build a profiled surface, particularly a ribbed surface. The first surface 70 is comprised of a plurality of elevated partial surfaces being the elevated part of the ribbed surface, i.e. the ribs themselves. The second surface 71 is comprised of a plurality of recessed partial surfaces forming the recesses of the ribbed surface, i.e. grooves between the ribs.

The first surface 70 has a first surface expanse which is the overall surface expanse of all elevated partial surfaces. The second surface 71 has a second surface expanse which is the overall surface expanse of all recessed partial surfaces.

According to the invention, the first surface expanse 70 is less than a cross sectional plane of the airfoil 27 perpendicular to the first direction D, i.e. parallel to the platform 25. This means that the first surface expanse 70 has a lesser expanse than compared to an airfoil with a flat surface at the tip region 29, as it can be seen for example in figure 3.

With cross sectional plane of the airfoil 27 any possible plane is meant that could be defined parallel to the platform 25, e.g. a plane close to the tip region 29, a plane close to the platform 25, or any plane in between, especially a plane with the smallest possible cross section.

According to the invention, the first distance D1 is greater than the second distance D2.

With this configuration and once the blades are assembled and during operation of the gas turbine, the total surface of the tip region 29 that may be in contact with an opposing surface of the compressor casing, may be only the first surface 70, which has a first surface expanse less than a flat tip region as it is shown in figure 3. This is particularly advantageous if the tip region 29 - especially the material of the first surfaces 70 - is composed of a deformable material. In this case the ribs can adjust to the opposing contour by deformation during operation if contact is made to the opposing material.

Figure 4A specifies a first embodiment, in which the ribs extend in parallel between the leading tip edge 55 and the trailing tip edge 56. The ribs, defined by alternating first surfaces 70 and second surfaces 71, may be completely straight, or may follow the curved form of the airfoil along the pressure surface 42 and/or the suction surface 43. Alternatively the ribs may be arranged perpendicular to the direction of rotation of the airfoil 27 or may be arranged at a specific angle in respect of the direction of rotation.

In a second embodiment according to figure 4B, again parallel ribs of alternating first surfaces 70 and second surfaces 71 are shown. The direction of the ribs is substantially perpendicular to at least one area of the suction surface 43 and/or pressure surface 42. In figure 4B each partial surface of the first surface 70 is substantially rectangular. Alternatively first surfaces 70 may be in form of a trapezium if the grooves between the ribs are not perfectly parallel.

Not shown in the figures, the embodiments of figure 4A and figure 4B may be combined to gain a grid pattern with a set of parallel grooves extending between the leading tip edge 55 and the trailing tip edge 56 and a set of parallel grooves extending between the suction surface 43 and the pressure surface 42.

Further variants of grid patterns are shown in figures 4C and 4D. In both variants a first plurality of ribs or grooves are arranged diagonally in direction of the trailing tip edge 56 of the airfoil 27 and the second plurality of ribs or grooves are arranged diagonally in direction of the leading tip edge 55 of the airfoil 27, the ribs and/or grooves intersecting each other. According to the figures, the intersection occurs with a right angle, but different angles are possible. According to figure 4C, the grid pattern has a shape of a first plurality of ribs intersected with a second plurality of ribs. Thus the first surface 70 results in a plurality of rhombus like surfaces. The second surface 71 results in a grid of grooves between the rhombus like surfaces of the first surface 70.

According to figure 4D, the grid pattern has a shape of an inverse profile of the previously discussed pattern of a first plurality of ribs intersected with a second plurality of ribs. This results in a plurality rhombus like cavities as the second surface 71. The first surface 70 surrounds these cavities like meshed walls that get intersected.

The given profiles may be advantageous because only a fraction of the tip region 29 may be in contact with an opposing surface like the outer guide surface 21. Particularly, only the first surface 70 may be in contact.

Thus, all of these embodiments have the advantage that for the elevated regions underneath the first surface 70 a flexible material can be used that is deformable under pressure. So the operating clearance between the tip region 29 and an opposing surface may be reduced.

Besides, it is particularly advantageous if - additionally or alternatively to the deformable material - the tip region 29 is designed to abrade. In this case, and according to the invention, it is sufficient to only coat the first surface 70 with an abradable or abrasive coating, because this is the only surface which is in contact with the opposing surface (which itself may be coated with the "opposite" coating, i.e. with abrasive coating if the first surface 70 comprises an abradable coating and with abradable coating if the first surface 70 comprises an abrasive coating). By this the amount of coating material may be reduced. Furthermore the force on the blades to abrade is reduced.

According to the embodiments, the radial gap 23 - which may be affected by manufacturing or assembly tolerances - during operation may be reduced so that also leakage of air will be reduced. This again improves the efficiency of the compressor.

As a further positive side effect, the invention reduces the need to grind the fully assembled compressors, particularly the need to grind the rotor blades to size, because the tip region of the blade will adapt to the opposing surface simply during operation of the gas turbine.

Even though the embodiments show a compressor section as an example, the same principles also apply to airfoils in the turbine section of a gas turbine engine. Besides, the principles can be applied to blades but also to guide vanes.

## Claims

1. Airfoil (27) of a turbomachine, particularly a gas turbine (1), the airfoil (27) particularly being arranged in a compressor section (5) of the gas turbine (1), the airfoil (27) comprising:
- a platform (25);
- a pressure surface (42) and a suction surface (43), extending substantially perpendicular to the platform (25) along a first direction (D),
the first direction (D) being defined as a direction substantially perpendicular to the platform (25) and progressing with a distance to the platform (25);
- a tip region (29) between the pressure (42) and the suction surface (43) opposite to the platform (25) in respect of the pressure (42) and the suction surfaces (43),
the tip region (29) being a distant end of the airfoil (27) in direction along the first direction (D) and being configured such that the tip region (29) comprises
i) a first surface (70) with a first surface expanse less than a cross sectional plane of the airfoil (27) perpendicular to the first direction (D) and with a first distance (D1) to the platform (25) along the first direction (D),
ii) a second surface (71) with a second surface expanse and with a second distance (D2) to the platform (25) along the first direction (D),
the first distance (D1) being greater than the second distance (D2) and
the first surface (70) and the second surface (71) together build a profiled surface, particularly a ribbed surface.

2. Airfoil (27) according to claim 1,
**characterised in that**
the first surface (70) being a plurality of elevated areas of the profiled surface and the second surface (71) being a plurality of recessed areas of the profiled surface.

3. Airfoil (27) according to claim 2,
**characterised in that**
the plurality of elevated areas of the profiled surface and the plurality of recessed areas of the profiled surface being arranged alternating.

4. Airfoil (27) according to one of the claims 1 to 3,
**characterised in that**
the elevated areas and the recessed areas being arranged as:
- ribs between the suction surface (43) and the pressure surface (42);
- ribs substantially parallel to the suction surface (43) or to the pressure surface (42);
- grid pattern.

5. Airfoil (27) according to claim 4,
**characterised in that**
the grid pattern having a shape of a first plurality of ribs intersected with a second plurality of ribs, or the grid pattern having a shape of an inverse profile of a first plurality of ribs intersected with a second plurality of ribs,
the first plurality of ribs being diagonal in direction of a trailing edge (45) of the airfoil (27) and the second plurality of ribs being diagonal in direction of a leading edge (44) of the airfoil (27).

6. Airfoil (27) according to one of the claims 1 to 5,
**characterised in that**
the tip region (29) being composed of a deformable material.

7. Airfoil (27) according to one of the claims 1 to 6,
**characterised in that**
the tip region (29) being either
- coated with an abrasive coating for abrading an opposing surface or
- coated with an abradable coating.

8. Guide vane, particularly a variable guide vane of a gas turbine (1), comprising an airfoil (27) according to one of the claims 1 to 7.

9. Blade, particularly of a gas turbine (1), comprising an airfoil (27) according to one of the claims 1 to 7.

10. Gas turbine (1) comprising at least one of a compressor section (5) or a turbine section (8), the compressor section (5) or the turbine section (8) comprising at least one airfoil (27) configured according to one of the claims 1 to 7.

11. Turbomachine comprising at least one airfoil (27) configured according to one of the claims 1 to 7.
